# EUROPEAN PATENT APPLICATION

(11) **EP 2 962 835 A1**
(43) Date of publication of application: **06.01.2016**
(21) Application number: 14757803.3
(22) Date of filing: 05.02.2014
(51) Int. Cl.: B29C 65/48, B32B 25/04, B32B 27/00, C09J 5/00, C09J 201/00

(54) **LAMINATION METHOD AND LAMINATE**

(30) Priority: 28.02.2013 JP 2013039262
(71) Applicant: Fujifilm Corporation, Minato-ku Tokyo 106-8620 (JP)
(72) Inventor: SATO Hiroshi, Haibara-gun Shizuoka 421-0396 (JP); SHINOZUKA Tomoyuki, Haibara-gun Shizuoka 421-0396 (JP)
(74) Representative: Hoffmann Eitle
(86) International application number: PCT/JP2014/052695
(87) International publication number: WO 2014/132764

(57) **Abstract**

The purpose of the present invention is to provide: a lamination method with which high membrane thickness precision can be obtained by reducing variations in substrate membrane thickness, the method being highly versatile and capable of limiting cost increases; and a laminate. This lamination method comprises a gluing process for conveying a substrate and a support with specified conveyance paths and gluing the support to the main surface of the substrate, and a curing process for curing the adhesive after the gluing process. The gluing process glues the substrate to the support by passing same successively between two or more pairs of nip rollers. The two or more pairs of nip rollers are set so that the nip distance of the pair of nip rollers disposed on the downstream side is equal to or less than the nip distance of nip rollers disposed on the upstream side.

## Description

### TECHNICAL FIELD

The present invention relates to a lamination method of a non-metallic substrate made of resin, rubber or the like and a laminate. The present invention more specifically relates to a lamination method which improves the film thickness accuracy in a substrate and a laminate.

### BACKGROUND ART

Rubber sheets and resin sheets suffer from quality variations due to widely varying film thicknesses. Therefore, a variety of manufacturing methods which improve the film thickness accuracy of rubber sheets in manufacturing the rubber sheets have been proposed.

For example, Patent Literature 1 describes a rubber sheet manufacturing method comprising: rolling a rubber material placed on a carrier sheet between a plurality of calender rolls to a predetermined thickness and vulcanizing a rolled sheet between a pair of hot plates while heating under pressure, wherein a side of each of the hot plates contacting the rolled sheet is only made up of a flat surface and pressure is applied to the rolled sheet at a contact pressure of 300 - 1,200 N/cm². Patent Literature 1 describes that the thickness accuracy can thus fall within ±15%.

Patent Literature 2 describes a silicone rubber sheet manufacturing method comprising, using a centrifugal molding machine provided with a mold, injecting liquid silicone rubber having a viscosity at ordinary temperature of 0.1 - 100 Pa·s into the mold and curing the liquid silicone rubber along an inner peripheral surface of the mold by rotating the mold at an elevated predetermined temperature for a predetermined period of time after rotating the mold at a predetermined speed of rotation at ordinary temperature for a predetermined period of time. Patent Literature 2 describes that the film thickness accuracy thus falls within a range of 6.7%.

A variety of manufacturing methods which improve the film thickness accuracy of resin sheets other than rubber sheets have also been proposed.

For example, Patent Literature 3 describes a method of manufacturing a polyacetal resin sheet comprising: a step of ejecting polyacetal resin melted in an extruder through a T manifold die; and a step of continuously forming the polyacetal resin while the polyacetal resin is pinched between and pressed by a rotating forming roller and a cylindrical forming drum which rotates in an arc shape along a part of an outer peripheral surface of the forming roller, is radially flexible and is made of a thin pipe, wherein the forming roller, the forming drum and an air gap (distance from an exit of the T manifold die to a point where the melted resin is pinched between and pressed by the forming roller and the forming drum) are controlled. Patent Literature 3 describes that the film thickness accuracy can thus fall within a range of 2.5% - 9.5%.

Patent Literature 4 describes a coating die head comprising: a slit for ejecting coating liquid and a lip portion formed approximately at right angles to the slit on each side at a distal end of the slit, wherein a surface of the lip portion is subjected to mirror grinding to adjust a surface roughness Rmax to 0.2 S or less, a side surface at the distal end is subjected to fluororesin-containing electroless nickel plating to increase a contact angle with respect to the coating liquid on the side surface at the distal end, straightness of a border line between the side surface at the distal end and the lip portion and parallelism with respect to the slit are adjusted to 2 µm/m or less, and a deviation of the border line between the side surface at the distal end and the lip portion from a border line between a large contact angle region and a small contact angle region in a border region of the side surface at the distal end and the lip portion is adjusted to 2 µm or less. Patent Literature 4 describes that the film thickness accuracy can thus fall within ±1.5% (a range of 3%).

For example, a lamination method which involves pressure bonding a support and a substrate together by calender rolls (nip rollers) as described in Patent Literature 5 is conventionally known as a lamination method for bonding a support to a substrate using a rubber sheet or a resin sheet as the substrate.

### CITATION LIST

### PATENT LITERATURE

Patent Literature 1: JP 4368654 B
Patent Literature 2: JP 4739558 B
Patent Literature 3: JP 2009-279909 A
Patent Literature 4: JP 4601918 B
Patent Literature 5: JP 4989787 B

### SUMMARY OF INVENTION

### TECHNICAL PROBLEMS

However, the film thickness accuracy obtained by the methods described in Patent Literatures 1 and 2 is not sufficient in applications requiring high accuracy.

The method described in each of Patent Literatures 3 and 4 achieves a high film thickness accuracy but suffers from lack of versatility due to considerable equipment constraints and cost increases because of the necessity of special processing.

Laminating a rubber sheet and a resin sheet has been known as described in Patent Literature 5 but correcting film thickness variations by lamination has not been known.

The present invention has been made to solve such prior art problems and aims at providing a lamination method which can reduce film thickness variations in a non-metallic substrate to achieve a high film thickness accuracy, ensures high versatility, and can suppress cost increases, as well as a laminate obtained thereby.

### SOLUTION TO PROBLEMS

In order to achieve the foregoing object, the present invention provides a lamination method of laminating a support to a non-metallic substrate, comprising: an application step of applying an adhesive to a main surface of the non-metallic substrate; a bonding step of bonding the support to the main surface of the non-metallic substrate while transporting the non-metallic substrate and the support along predetermined transport paths; and a curing step of curing the adhesive after the bonding step, wherein the bonding step is performed to bond the non-metallic substrate and the support together while sequentially passing the non-metallic substrate and the support through two or more nip roller pairs and wherein, of the two or more nip roller pairs, a nip roller pair provided downstream has a nip distance set to be equal to or smaller than a nip distance of a nip roller pair provided upstream.

It is preferred that a surface of the adhesive applied to the main surface of the non-metallic substrate just before the bonding step has a maximum height Rmax indicative of surface roughness of up to 200 µm.

Preferably, at least one nip roller in a most downstream nip roller pair has a heater.

Preferably, each nip roller of the two or more nip roller pairs has a diameter of 150 mm - 500 mm.

Preferably, the adhesive applied to the main surface of the non-metallic substrate has an average thickness of 50 µm - 300 µm just before the bonding step.

Also, it is preferred that the adhesive has a viscosity of 0.001 Pa·s - 100 Pa·s just before the bonding step.

Preferably, the non-metallic substrate is made of a rubber material and has a thickness of 400 µm - 6,000 µm.

Also, it is preferred that the non-metallic substrate has a modulus of elasticity of 0.5 N/mm² - 5.0 N/mm².

Preferably, the adhesive is a photo-curable adhesive.

Preferably, each of the two or more nip roller pairs has a nip distance-adjusting mechanism.

In order to achieve the foregoing object, the present invention also provides a laminate comprising: a non-metallic substrate having a thickness of 400 µm - 6,000 µm; an adhesive layer laminated onto a main surface of the non-metallic substrate and having a thickness of 50 µm - 300 µm; and a support laminated onto the adhesive layer, wherein a ratio Ro/do of a maximum height R₀ indicative of surface roughness at an interface between the non-metallic substrate and the adhesive layer to an average thickness do of the non-metallic substrate is 5% - 30%, and wherein a ratio R₁/d of a maximum height R₁ indicative of surface roughness at a surface of the support to an overall average thickness d of the non-metallic substrate, the adhesive layer and the support is 0.5% - 2.5%.

Preferably, the non-metallic substrate is made of a rubber material and has a modulus of elasticity of 0.5 N/mm² - 5.0 N/mm².

Preferably, a cover film is adhered to an opposite main surface of the non-metallic substrate.

### ADVANTAGEOUS EFFECTS OF INVENTION

The invention as described above can be applied to a variety of substrates regardless of the substrate material or the like, and can also reduce film thickness variations in a non-metallic substrate to achieve a high film thickness accuracy while suppressing cost increases owing to unnecessary special processing.

### BRIEF DESCRIPTION OF DRAWINGS

[FIG. 1] FIG. 1 is a flowchart showing an embodiment of a lamination method according to the invention.
[FIG. 2] FIG. 2 is a cross-sectional view conceptually showing a laminate prepared by the lamination method according to the invention.
[FIG. 3] FIG. 3 is a view conceptually showing an example of the configuration of a laminator for implementing the lamination method shown in FIG. 1.
[FIG. 4] FIG. 4 is a cross-sectional view conceptually showing a substrate and an adhesive layer to be fed to a nipping portion.
[FIG. 5] FIG. 5 is a view conceptually showing the configuration of a first nipping portion in FIG. 3.
[FIG. 6] FIG. 6 is a conceptual cross-sectional view for illustrating the film thickness accuracy in a laminate.
[FIG. 7] FIG. 7 is a cross-sectional view conceptually showing a laminate in which a cover film is adhered.

### DESCRIPTION OF EMBODIMENTS

A lamination method according to the invention is described below in detail with reference to an embodiment shown in the accompanying drawings.

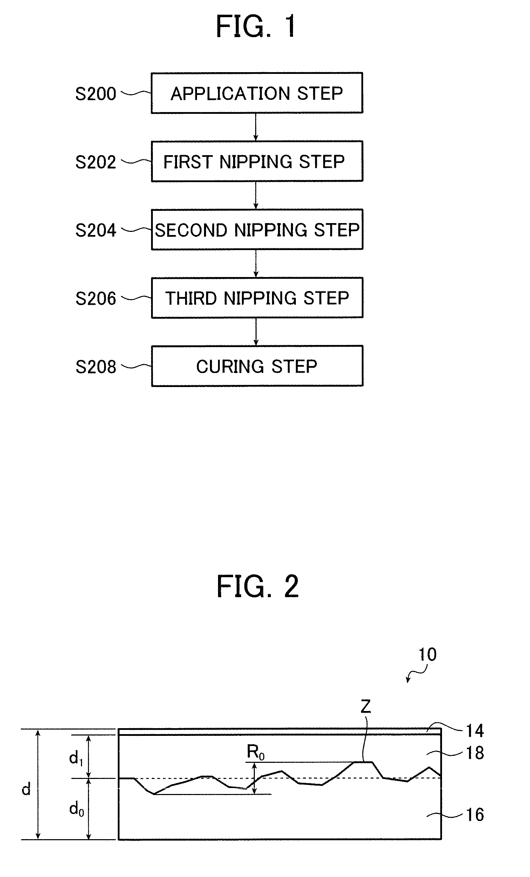

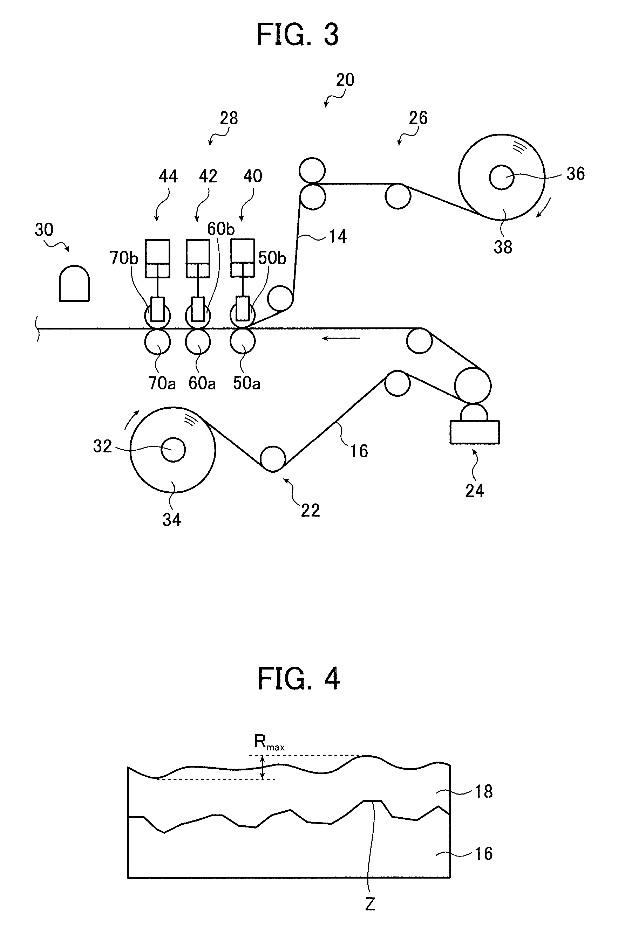

FIG. 1 is a flowchart showing an embodiment of the lamination method according to the invention. FIG. 2 is a cross-sectional view conceptually showing a laminate prepared by the manufacturing method shown in FIG. 1. FIG. 3 is a view conceptually showing an example of a laminator for implementing the manufacturing method shown in FIG. 1.

As shown in FIG. 1, the lamination method of the invention sequentially performs an application step S200 for applying an adhesive onto a substrate 16 being transported along a predetermined transport path, a first nipping step S202 for nipping and pressing the substrate 16 having the adhesive applied thereonto and a support 14 being transported along a predetermined transport path to laminate them together, a second nipping step S204 and a third nipping step S206 for further nipping and pressing the substrate 16 and the support 14 laminated together, and a curing step S208 for curing the adhesive.

As shown in FIG. 2, the laminate obtained by the manufacturing method of the invention includes the substrate 16 having surface asperities, an adhesive layer 18 laminated on the substrate 16 and the support 14 laminated on the adhesive layer 18, and has a flat and smooth surface by covering the surface asperities of the substrate 16 with the adhesive layer 18. Details of the laminate 10 will be given later.

As shown in FIG. 3, the laminator 20 includes a substrate transport portion 22 transporting the substrate 16, an adhesive application portion 24 performing the application step S200, a support transport portion 26 transporting the support 14, a nipping portion 28 having a first nipping portion 40 performing the first nipping step S202, a second nipping portion 42 performing the second nipping step S204 and a third nipping portion 44 performing the third nipping step S206, and a light irradiation portion 30 performing the curing step S208.

The substrate 16 that may be used in the invention is not particularly limited as long as it is a non-metallic substrate, and is preferably a substrate made of a rubber sheet or a resin sheet. The present invention is more effective in a substrate having film thickness variations and is therefore more advantageous when a rubber sheet which is more likely to have film thickness variations is used as the substrate.

The rubber sheet that may be used in the invention is not particularly limited and rubber sheets manufactured by various known methods can be used. In other words, rubber sheets can be manufactured by known methods such as compression molding, transfer molding, injection molding, extrusion molding, and centrifugal molding. To be more specific, such rubber sheets are described in Nippon Gomu Kyokaishi (the Journal of the Society of Rubber Science and Technology, Japan) vol. 68 (1995) pp. 76-85, pp. 108-118, vol. 69 (1996) pp. 375-383. As for the materials, materials described in "Compounding Ingredients for Rubber and Plastics, second edition" (Rubber Digest Co., Ltd.) can be used.

The present invention can be more advantageously used in a rubber sheet having a large film thickness and enlarged surface asperities, for example, a rubber sheet for use as an original plate of a printing plate. Alternatively, the present invention can be advantageously used in a blanket for precision printing, an intermediate transfer body for office automation equipment.

A substrate manufactured by a manufacturing method in which a substrate is formed by application on a casting conveyor can be advantageously used as the substrate 16. In a substrate manufactured by such a manufacturing method, the formed surface of contact with the conveyor is flat and smooth but the upper surface has large asperities under the influence of casting unevenness and drying air. Since even large asperities can be advantageously covered, the present invention can be more advantageously applied to such rubber sheets.

The present invention can be advantageously applied to the substrate 16 having a thickness in a range of 400 µm - 6,000 µm.

The present invention can be more advantageously applied to a rubber sheet having a modulus of elasticity of 0.5 N/mm² - 5.0 N/mm².

A numerical value range expressed using a hyphen (-) in the specification refers to a range including numerical values described before and after the hyphen as the lower limit and the upper limit, respectively.

The resin sheet that may be used in the present invention is not particularly limited and examples thereof include a silicone resin, a fluororesin, a PET film and a PP film. Resin sheets manufactured by various known methods can be used for the substrate 16. For example, the resin sheets can be manufactured by known methods described in Patent Literatures 3 to 5.

The substrate 16 is not limited to a single layer type but may be a laminated sheet having a plurality of films.

The lamination method of the invention is described below by explaining each portion of the laminator 20.

The substrate transport portion 22 transports the substrate 16 having a large length as pulled out from a substrate roll 34 in the longitudinal direction of the substrate 16 along a predetermined transport path.

The substrate transport portion 22 includes a rotary shaft 32 on which the substrate roll 34 is to be mounted, and a plurality of guide rollers for guiding the substrate 16 along the predetermined transport path.

When the substrate roll 34 is mounted on the rotary shaft 32, the substrate 16 is guided through the plurality of guide rollers and is passed along the predetermined path which sequentially includes the adhesive application portion 24, the nipping portion 28 and the light irradiation portion 30. The substrate 16 is transported along the predetermined path by a transport device such as a driving roller (not shown).

As shown in FIG. 3, in the laminator 20, the adhesive application portion 24, the nipping portion 28 and the light irradiation portion 30 are disposed in this order from the upstream side on the transport path of the substrate 16.

In the laminator 20, the support is laminated on the substrate 16 by each portion disposed on the transport path of the substrate 16 as the substrate 16 with a large length having been pulled out from the substrate roll 34 is transported in the longitudinal direction along the predetermined transport path.

The substrate 16 is preferably speed-controlled by a transport device such as a driving roller and transported at a constant speed.

### (Application Step S200)

The adhesive application portion 24 is a portion where the application step S200 is performed. To be more specific, the adhesive application portion 24 applies an adhesive onto the main surface of the substrate 16 (the surface facing the support 14) to a predetermined thickness.

The adhesive application portion 24 preferably applies an adhesive by a gravure coating process. Application of the adhesive by the gravure coating process allows the adhesive to be applied more uniformly, in other words, to be applied so that the adhesive may have a flat and smooth surface. The adhesive can be uniformly applied particularly in the width direction of the substrate 16.

Exemplary coaters for use in the gravure coating process include a direct gravure coater, a chamber doctor coater, an offset gravure coater, a kiss coater using a gravure roll, and a reverse roll coater made up of a plurality of rolls. Other exemplary coaters include a comma coater which has a cylindrical blade and applies an adhesive by supplying the adhesive to an application portion while scraping the supplied adhesive with the blade, a die coater which uses a slot die or the like to directly supply an adhesive, and a knife coater which applies by scraping excess liquid with a knife into a formed liquid reservoir. The coater can be determined from among the various coaters in consideration of conditions such as the support type, the application amount and the coating speed.

The adhesive to be used is not particularly limited and examples thereof include a photo-curable adhesive, a thermosetting adhesive and an anaerobic adhesive. Of these, a photo-curable adhesive is preferable for ease of control of the curing reaction and an ultraviolet-curable adhesive is preferable as the photo-curable adhesive.

For example, adhesives described in "Handbook of Adhesives," 2nd edition, I. Skeist ed., (1977) can be used.

FIG. 4 is a cross-sectional view conceptually showing a laminate before the support 14 is bonded to the main surface of the substrate 16 having an adhesive applied thereto.

In the laminate before bonding the support 14, the surface of the adhesive layer 18 applied to the substrate 16 preferably has a maximum height Rmax indicative of the surface roughness of 200 µm or less. By adjusting the maximum height Rmax at the surface of the adhesive layer 18 to 200 µm or less, the surface can be made flat and smooth when the support 14 is bonded thereto in the nipping portion 28 to be described later, thus improving the film thickness accuracy.

The maximum height Rmax as used in the present application refers to a maximum height Rz as defined by JIS B0601:2001. In this embodiment, assuming that the other main surface of the substrate 16 (the surface opposite to the adhesive layer 18) is substantially flat and smooth, Rmax is defined to be represented by the following expression: Rmax = (maximum film thickness of laminate of adhesive layer 18 and substrate 16) - (minimum film thickness of laminate of adhesive layer 18 and substrate 16).

To be more specific, Rmax is determined by calculating the foregoing (maximum film thickness) - (minimum film thickness) through measurement with a non-contact displacement meter such as a laser displacement meter or an ultrasonic displacement meter.

The adhesive preferably has a viscosity of 0.001 Pa·s - 100 Pa·s, more preferably 0.01 Pa·s - 10 Pa·s, and even more preferably 0.05 Pa·s - 5 Pa·s. By adjusting the viscosity of the adhesive in the foregoing range, the adhesive is prevented from dripping when applied, and the surface is leveled when the adhesive is applied to the substrate 16, whereby the adhesive layer 18 can have a surface maximum height Rmax of 200 µm or less. In addition, by adjusting the viscosity of the adhesive in the foregoing range, the surface can be made flat and smooth when nipped in the nipping portion 28 to be described later, thus improving the film thickness accuracy.

The viscosity as used in the present application is measured with known viscometers such as a capillary viscometer, a falling ball viscometer, a rotating viscometer, a vibratory viscometer, a parallel disk viscometer and bubble viscometer.

When a photo-curable adhesive is used as the adhesive, the adhesive may be liquid or solid at room temperature (25°C). The viscosity at 25°C preferably falls within the foregoing range when the adhesive is liquid at room temperature.

The photo-curable adhesive is preferably heated to its softening temperature when the adhesive is solid at room temperature. In other words, the adhesive is preferably heated to a temperature at which the viscosity falls within the foregoing range.

An adhesive dissolved in a solvent may be used and the solvent be dried and removed after application of the adhesive. Alternatively, a solventless hot-melt photo-curable adhesive may be applied in a heated state.

The thickness of the adhesive layer 18 applied to the substrate 16 before bonding the support 14 may be appropriately determined depending on the thickness of the substrate 16, the magnitude of surface asperities of the substrate 16, the film thickness accuracy required of the laminate 10 and the like, but is preferably 50 µm - 300 µm.

More advantageously, by adjusting the thickness of the adhesive layer 18 to 50 µm or more, asperities at the main surface of the substrate 16 can be covered to make the surface flat and smooth while ensuring the adhesion strength with the adhesive loss suppressed. In addition, by adjusting the thickness of the adhesive layer 18 to 300 µm or less, the surface can be made flat and smooth while suppressing strain due to cure shrinkage upon curing of the adhesive.

The substrate 16 having the adhesive applied thereto is fed to the first nipping portion of the nipping portion 28.

The support transport portion 26 transports the support 14 having a large length as pulled out from a support roll 38 in the longitudinal direction of the support 14 along a predetermined transport path.

The support transport portion 26 includes a rotary shaft 36 on which the substrate roll 38 is to be mounted, and a plurality of guide rollers for guiding the substrate 14 along the predetermined transport path.

When the support roll 38 is mounted on the rotary shaft 36, the support 14 is guided through the plurality of guide rollers and is passed along the predetermined path in which the support 14 passes through the nipping portion 28. The support 14 is transported along the predetermined path by a transport device such as a driving roller (not shown).

The support 14 is fed to the first nipping portion 40 of the nipping portion 28.

The support 14 as used herein is not particularly limited and a support having high dimensional stability is preferably used. Exemplary support materials include metals such as steels, stainless steels and aluminum; thermoplastic resins (e.g., cycloolefin resins, crystalline polyolefin resins, polyester resins, polycarbonate resins, acrylic resins, and triacetyl cellulose resins); synthetic rubbers such as styrene - butadiene rubbers; and glass fiber reinforced plastic resins (epoxy resins and phenol resins). In addition, a PET (polyethylene terephthalate) film and a steel substrate are more preferably used for the support 14.

The support 14 is preferably transparent and more preferably a PET film.

If the support is transparent, in a case where a photo-curable adhesive is used as the adhesive, light irradiation from the support 14 side is possible, thus enabling a curing reaction in a small amount of exposure.

The support 14 preferably has a thickness of 50 µm - 350 µm and more preferably 75 µm - 250 µm.

### (Nipping Steps S202 to S206)

The nipping portion 28 is a portion where the substrate 16 and the support 14 transported along the predetermined transport paths, respectively, are nipped while pressure is applied (in short, nipped) to be laminated together to correct the film thickness accuracy of the laminate 10. The nipping portion 28 includes the first nipping portion 40 performing the first nipping step S202, the second nipping portion 42 performing the second nipping step, and the third nipping portion 44 performing the third nipping step.

Since the first nipping portion 40, the second nipping portion 42 and the third nipping portion 44 basically have the same configuration except that nip roller pairs are different from each other in distance between rollers (nip distance), the first nipping portion 40 is described as a typical example. Different features are only described about the second nipping portion 42 and the third nipping portion 44.

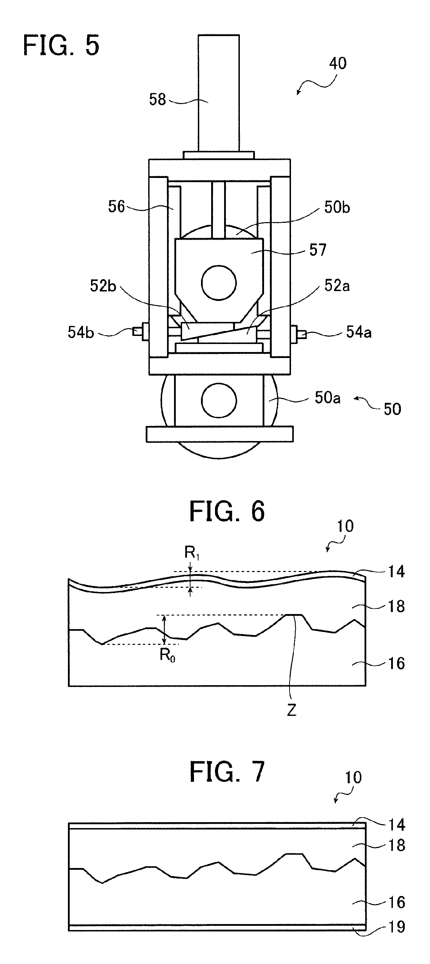

FIG. 5 is a view conceptually showing the configuration of the first nipping portion 40.

The first nipping portion 40 has a mechanism in which the nip distance is adjustable.

As shown in FIG. 5, the first nipping portion 40 includes a nip roller pair 50 having a lower nip roller 50a and an upper nip roller 50b, wedge stoppers 52a and 52b, adjusting screws 54a and 54b, guide rails 56, a bearing portion 57, and an air cylinder 58.

The lower nip roller 50a and the upper nip roller 50b rotate about their axes which are in a direction perpendicular to the direction of transport of the substrate 16.

The lower nip roller 50a is held so as to be rotatable at a predetermined position. On the other hand, the upper nip roller 50b disposed above the lower nip roller is rotatably held in the bearing portion 57.

The bearing portion 57 has slits in its side surfaces and is vertically guided by the guide rails 56 fitted into the slits.

The wedge stoppers 52a and 52b making up the pair are vertically disposed below the lower surface of the bearing portion 57 so that the latter is stacked on top of the former. The wedge stoppers 52a and 52b are configured to change their horizontal positions with the use of the adjusting screws 54a and 54b so that the height of the wedge stopper 52b is adjustable.

In addition, the upper surface of the bearing portion 57 is pressed downward by the air cylinder 58. Therefore, the bearing portion 57 is held with its lower surface in contact with the upper surface of the wedge stopper 52b.

The first nipping portion 40 having such a configuration can adjust the distance between the upper nip roller 50b and the lower nip roller 50a (nip distance) by adjusting the height of the bearing portion 57, i.e., the height of the upper nip roller 50b through adjustment of the height of the wedge stopper 52b with the adjusting screws 54a and 54b.

The first nipping portion 40, the second nipping portion 42 and the third nipping portion 44 are adjusted by such mechanisms for adjusting the nip distance so that their nip distances are different from each other.

To be more specific, the nip distance is set to be smaller (or similar) toward the downstream side in the transport direction of the substrate 16. In other words, the nip distance in the first nipping portion 40 is set to be the largest, whereas the nip distance in the third nipping portion 44 is set to be the smallest.

The nip roller pair 50 of the first nipping portion 40 continuously bond (laminate) together the adhesive-bearing substrate 16 and the support 14 which pass therethrough. In this process, the amount of the adhesive is adjusted by the nip distance to define the thickness of the laminate.

Next, a nip roller pair 60 made up of a lower nip roller pair 60a and an upper nip roller 60b in the second nipping portion 42 further nips the laminate composed of the substrate 16, the adhesive and the support 14 having passed through the first nipping portion 40, and the amount of the adhesive is adjusted by the nip distance which is smaller than that in the first nipping portion 40, thereby defining the thickness of the laminate.

Furthermore, a nip roller pair 70 made up of a lower nip roller 70a and an upper nip roller 70b in the third nipping portion 44 further nips the laminate composed of the substrate 16, the adhesive and the support 14 having passed through the first nipping portion 40 and the second nipping portion 42, and the amount of the adhesive is adjusted by the nip distance which is smaller than that in the second nipping portion 42, thereby defining the final thickness of the laminate.

As described above, various attempts have conventionally been made to improve the film thickness accuracy of sheets in manufacturing rubber sheets and resin sheets.

However, there were problems such as insufficient accuracy, lack of versatility due to equipment constraints for implementing the manufacturing method, and cost increases because of the necessity of special processing.

In contrast, according to the present invention, when the support 14 is laminated onto a rubber sheet or a resin sheet used as the substrate 16 onto which an adhesive is applied, the substrate 16, the adhesive and the support 14 are sequentially nipped by the plurality of nip roller pairs, with the nip distance becoming smaller toward downstream, and thereafter the adhesive is cured. In this way, surface asperities of the substrate 16 are covered and the adhesive is leveled by nipping a plurality of times, thus enabling improvement of the surface smoothness of the support 14 and improvement of the film thickness accuracy of the laminate 10.

In a case where the support is simply laminated by nipping with one nip roller pair, the substrate 16 deforms under the influence of the elasticity of the substrate 16 and the viscosity of the adhesive (liquid resistance) when passing through the nip roller pair, thus changing the substantial nip distance. Therefore, the adhesive cannot be sufficiently leveled to hinder improvement of the surface smoothness of the support and sufficient improvement of the film thickness accuracy.

In contrast, according to the invention, the substrate, the adhesive and the support are nipped a plurality of times by the plurality of nip roller pairs, and hence the adhesive is gradually leveled to enable improvement of the surface smoothness of the support 14 and improvement of the film thickness accuracy.

Particularly in a case where the substrate 16 is made of an elastic member such as a rubber sheet, the substrate 16 is more likely to deform when passing between the nip rollers making up the pair. Therefore, the adhesive cannot be sufficiently leveled by nipping once. In contrast, according to the invention in which nipping is performed a plurality of times, the adhesive can be sufficiently leveled even in a case where the substrate 16 is made of an elastic member such as a rubber sheet. Accordingly, the present invention can be particularly used with advantage when a rubber sheet is used as the substrate.

The materials of the nip rollers 50a and 50b are not particularly limited and a combination of a metal roll and a metal roll is preferable. A combination of a metal roll and a rubber roll and a combination of a rubber roll and a rubber roll may be applied depending on the characteristics of the substrate 16 and the like.

The upper nip roller 50b which is the roller on the support 14 side preferably has a heating mechanism. When the viscosity of the adhesive is reduced by increasing the temperature of the adhesive during nipping with the nip roller 50b having the heating mechanism, the liquid resistance during the passage between the nip rollers can be reduced to prevent the substrate 16 from deforming, thereby improving the surface smoothness of the support 14.

The adhesive passes between the nip rollers in a moment but when the adhesive is heated by a heater, the surface temperature of the adhesive is increased to reduce the viscosity of the surface portion of the adhesive. Therefore, the surface of the adhesive is more likely to be leveled to enable improvement of the surface smoothness of the support 14.

All the nip roller pairs may be provided with a heater but at least the upper nip roller 70b of the nip roller pair in the most downstream is preferably provided with a heater. By providing the upper nip roller 70b in the most downstream with a heater, the final film thickness accuracy of the laminate 10 can be advantageously improved.

The heating temperature applied by the heater is not particularly limited and may be appropriately determined depending on the properties of the adhesive, the materials of the substrate 16 and the support 14, the roll diameter, the operating conditions such as the transport speed, the required film thickness accuracy and the like.

For example, various known heaters such as an electric heater and a liquid jacket as described in JP 6-315980 A may be used as the heater in the upper nip roller 50b.

The nip rollers 50a and 50b preferably each have a small roll diameter in terms of production costs but diameter reduction may cause the rollers to bend due to the liquid resistance. In a case where the nip rollers have heaters, the diameter reduction leads to a decrease in heat transmission area to hinder sufficient heating of the adhesive and reduction of the liquid resistance, which may cause bending.

The roll diameter of each of the nip rollers 50a and 50b can be appropriately determined in consideration of the foregoing points. For example in a case where the adhesive has a viscosity in a range of 0.05 Pa·s - 5 Pa·s and the nip roller 50b has a heating mechanism, it is preferable to use the nip rollers 50a and 50b each having a diameter in a range of 150 mm - 500 mm. In this way, the accurate nip distance can be set without causing roll bending.

The respective nip distances in the first nipping portion 40, the second nipping portion 42 and the third nipping portion 44 may be appropriately determined depending on the properties of the adhesive, the material and the modulus of elasticity in each of the substrate 16 and the support 14, the roll diameter, the presence or absence of the heater, the operating conditions such as the transport speed, the required film thickness accuracy and the like.

The mechanism for adjusting the nip distance is not limited to the configuration in the illustrated example but various known mechanisms for adjusting the nip distance can be utilized.

The illustrated example is configured to include a mechanism for adjusting the nip distance. However, the present invention is not limited to this but the first nipping portion 40, the second nipping portion 42 and the third nipping portion 44 may each have a predetermined fixed nip distance instead of having a mechanism for adjusting the nip distance.

In the illustrated example, the nipping portion 28 is configured to include three nip roller pairs. However, the present invention is not limited to this but a configuration having two nip roller pairs or a configuration having four or more nip roller pairs may be applied. In consideration of the effect of improving the film thickness accuracy and costs, the nipping portion 28 preferably includes two to five nip roller pairs.

The substrate 16 having passed through the nipping portion 28 is fed to the light irradiation portion 30.

### (Curing Step S208)

The light irradiation portion 30 performs the curing step S208 and more specifically cures the adhesive (adhesive layer 18) between the substrate 16 and the support 14 by exposure to light such as ultraviolet rays (UV light). The adhesive is cured by exposure to light such as ultraviolet rays to adhere the substrate 16 and the support 14 to each other, thus obtaining the laminate 10.

Light that may be used in the curing step S208 is not particularly limited as long as actinic rays capable of curing the photo-curable adhesive under exposure are used, and examples thereof include α-rays, γ-rays, X-rays, ultraviolet rays (UV), visible rays, electron rays and laser beams. Of these, it is particularly preferable to use ultraviolet rays.

Laser beams are light beams having high coherence and are excellent in directivity and convergence properties and exemplary laser beams that may be illustrated include infrared laser beams to be described later.

Light for use in irradiation in the curing step S208 is preferably light at 200 - 600 nm. The light source that may be used in the curing step S208 is not particularly limited and illustrative examples of the light source that may be preferably used include a mercury lamp and a metal halide lamp.

The amount of light exposure in the curing step should be an amount sufficient to cure the photo-curable adhesive and is preferably 10 - 4,000 mJ/cm² and more preferably 20 - 2,500 mJ/cm².

In terms of ease of curing with light, at least one of the support 14 and the substrate 16 is preferably transparent and the support 14 is more preferably transparent.

The peel force between the substrate 16 and the support 14 after curing of the adhesive layer 18 is preferably 2N/cm or more, more preferably 3 N/cm or more, and even more preferably 4 N/cm or more. The peel force is also preferably up to 20 N/cm.

The laminate 10 having passed through the light irradiator is fed to the next step. For example, the laminate 10 may be wound as such or be fed to a step where a cover film 19 to be described later is bonded.

Next, the operation of the laminator 20 and the lamination method of the invention are described using FIGS. 1 and 3.

As described above, upon mounting of the substrate roll 34 on the rotary shaft 32, the substrate 16 is pulled out from the substrate roll 34 and is passed along the predetermined transport path. When the substrate 16 is passed along the predetermined transport path, transport of the substrate 16 is started under the drive from a drive source (not shown).

On the other hand, the support roll 38 is mounted on the rotary shaft 36 and the support 14 is pulled out from the support roll 38 and is passed along the predetermined transport path. When the support 14 is passed along the predetermined transport path, transport of the support 14 is started under the drive from a drive source (not shown) in synchronism with the transport of the substrate 16.

Upon start of the transport of the substrate 16, in the application step S200, the adhesive application portion 24 applies a photo-curable adhesive to the main surface of the substrate 16.

Next, in the first nipping step S202, the first nipping portion 40 laminates the support 14 to the substrate 16 having the adhesive applied thereto. Next, in the second nipping step S204, the second nipping portion 42 nips the laminate composed of the substrate 16, the adhesive and the support 14 and adjusts the amount of the adhesive, thereby defining the thickness of the laminate. Furthermore, in the third nipping step S206, the third nipping portion 44 nips the laminate composed of the substrate 16, the adhesive and the support 14 and adjusts the amount of the adhesive, thereby defining the thickness of the laminate.

Next, in the curing step S208, the light irradiation portion 30 irradiates the adhesive with UV light or the like to cure the adhesive, thus adhering the substrate 16 and the support 14 to each other, whereby the laminate 10 composed of the stacked substrate 16, adhesive layer 18 and support 14 is prepared.

Next, the laminate 10 prepared by the lamination method according to the invention is described with reference to FIGS. 2 and 6.

FIG. 6 is a view showing with emphasis surface asperities on the support 14 side surface of the laminate 10 shown in FIG. 2.

As shown in FIG. 2, the laminate 10 includes the substrate 16 having surface asperities at the main surface, the adhesive layer 18 laminated on the substrate 16 and the support 14 laminated on the adhesive layer 18. To be more specific, in the laminate 10, the substrate 16 and the support 14 are bonded together via the adhesive to cover the asperities of the substrate 16 with the adhesive layer 18 to thereby make the surface of the laminate 10 (the top surface of the support 14) flat and smooth, thus improving the film thickness accuracy of the laminate 10.

The ratio Ro/do (where R₀ denotes the maximum height indicative of the surface roughness at the interface z between the substrate 16 and the adhesive layer 18 in the laminate 10, and do denotes the average thickness of the substrate 16) is preferably 5% - 30%.

The average thickness do of the substrate 16 in the laminate 10 is preferably 400 µm - 6,000 µm.

The substrate 16 is preferably made of a rubber material and preferably has a modulus of elasticity of 0.5 N/mm² - 5.0 N/mm².

By applying the lamination method of the invention to the substrate 16 in which the surface roughness R₀ and the thickness do fall within the foregoing ranges, the asperities of the substrate 16 can be advantageously covered to improve the film thickness accuracy. In particular, the substrate 16 made of a rubber material and having a modulus of elasticity falling within the foregoing range deforms upon nipping and hence has difficulty in improving the film thickness accuracy. However, the film thickness accuracy can be advantageously improved by applying the present invention.

The average thickness d₁ of the adhesive layer 18 in the laminate 10 is preferably 50 µm - 300 µm.

If the average thickness d₁ of the adhesive layer 18 falls within the foregoing range, asperities of the substrate 16 can be more advantageously covered to improve the film thickness accuracy.

When the maximum height indicative of the surface roughness at the surface of the support 14 is denoted by R₁, the laminate 10 prepared by the lamination method of the invention may have a ratio R₁/d between the maximum height R₁ and the thickness d of the laminate 10 of 0.5% - 2.5%.

In order to prevent the substrate 16 side surface of the prepared laminate 10 (the surface of the substrate 16 opposite to the support 14) from having scratches and pits, the cover film 19 may be laminated to the substrate 16 side surface, as shown in FIG. 7.

A film similar to the support 14 may be used as the cover film 19. A PET (polyethylene terephthalate) film is particularly preferable in terms of ease of handling and costs. The cover film 19 can be laminated simultaneously with or subsequently to the support 14 by a method similar to the above-described lamination method for the support 14.

The cover film 19 preferably has a thickness of at least 25 µm and more preferably at least 50 µm in terms of preventing scratches and pits. On the other hand, the cover film 19 preferably has a thickness of up to 500 µm and more preferably up to 200 µm in terms of costs.

The cover film 19 may have a plain surface or a matted surface.

In a case where the cover film 19 is to be provided, the cover film 19 must be peelable. In a case where it is impossible or difficult to peel the cover film 19 or in a case where the cover film 19 is more likely to peel off due to weak adhesion between the substrate 16 and the cover film 19, a slip coat layer may be provided therebetween.

The material for use in the slip coat layer is preferably primarily composed of a resin which is soluble or dispersible in water and is less adhesive, as exemplified by polyvinyl alcohol, polyvinyl acetate, partially saponified polyvinyl alcohol, hydroxyalkyl cellulose, alkyl cellulose, and polyamide resin.

While the lamination method of the present invention has been described above in detail, the present invention is by no means limited to the foregoing embodiment and it should be understood that various improvements and modifications are possible without departing from the scope and spirit of the present invention.

### EXAMPLES

The present invention is described below more specifically with reference to an example and a comparative example. However, the present invention should not be construed as being limited to the following example.

### [Example 1]

In Example 1, the laminate 10 was prepared using the laminator 20 shown in FIG. 3.

The thickness do of the substrate 16 and the maximum height R₀ at the surface of the substrate 16 were measured by surface scanning with a laser displacement meter before applying an adhesive. The maximum height Rmax upon application of the adhesive was measured by surface scanning with a laser displacement meter after applying the adhesive. The thickness d and the surface roughness R₁ of the laminate 10 were each measured by surface scanning with a laser displacement meter after lamination. Three laser displacement meters (LK-H008 manufactured by Keyence Corporation) were disposed in the width direction on a pass roll (not shown) in each of before application, after application and after lamination and measurement was continuously made over 100 m with positions 50 mm inside from the edges and the web center lying on line.

A rubber sheet having a (Shore A) hardness of 64° and an average thickness do of 1.5 mm (TAKL6503 manufactured by Tigers Polymer Corporation) was used for the substrate 16. The substrate 16 had a surface maximum height R₀ of 200 µm. In other words, the ratio Ro/do of the maximum height R₀ to the thickness do of the substrate 16 before lamination was 13%.

An ultraviolet-curable adhesive (TB3042B) manufactured by ThreeBond Co., Ltd. was used as the adhesive. The adhesive had a viscosity at 25°C of 0.5 Pa·s. The adhesive was applied so that the adhesive at the time of application had a thickness of 120 µm and a maximum height Rmax of 60 µm.

A PET film with a thickness of 0.1 mm was used for the support 14.

All nip rollers were made of an SUS 304 material and had a roll diameter of 300 mm.

The nip distances in the first nipping portion 40, the second nipping portion 42 and the third nipping portion 44 were set to 60 µm, 30 µm and 10 µm, respectively.

The upper nip roller 70b was heated to 50°C by a heater.

The light irradiation portion 30 used UV light for irradiation. The amount of exposure was set to 1,200 mJ/cm².

After laminating the support 14 to the substrate 16 in the laminator 20 under the conditions as described above, the thickness d of the resulting laminate 10 and the maximum height R₁ indicative of the surface roughness at the support 14 side surface were measured. As a result of the measurement, the thickness d and the maximum height R₁ were 1.7 mm and 34 µm, respectively. In other words, the ratio R₁/d of the maximum height R₁ to the thickness d was 2%.

### [Comparative Example 1]

Example 1 was repeated except that the number of nip roller pairs in the nipping portion was changed to one and the adhesive application portion 24 was replaced by a mechanism for applying an adhesive to the substrate 16 through dripping of the adhesive, thereby preparing a laminate. The prepared laminate had a thickness d of 1.7 mm and a maximum height R₁ of 85 µm. In other words, the ratio R₁/d was 5%.

As described above, it is revealed that film thickness variations can be corrected to improve the film thickness accuracy in Example 1 as an example of the invention compared to Comparative Example 1.

The above results clearly show the beneficial effects of the invention.

### DESCRIPTION OF SYMBOLS

- 10: laminate
- 14: support
- 16: substrate
- 18: adhesive layer
- 19: cover film
- 20: laminator
- 22: substrate transport portion
- 24: adhesive application portion
- 26: support transport portion
- 28: nipping portion
- 30: light irradiation portion
- 32,: 36 rotary shafts
- 34: substrate roll
- 38: support roll
- 40: first nipping portion
- 42: second nipping portion
- 44: third nipping portion
- 50a, 60a, 70a: lower nip rollers
- 50b, 60b, 70b: upper nip rollers
- 52a, 52b: wedge stoppers
- 54a, 54b: adjusting screws
- 56: guide rail
- 57: bearing portion
- 58: air cylinder
- z: interface

## Claims

1. A lamination method of laminating a support to a non-metallic substrate, comprising:
an application step of applying an adhesive to a main surface of the non-metallic substrate;
a bonding step of bonding the support to the main surface of the non-metallic substrate while transporting the non-metallic substrate and the support along predetermined transport paths; and
a curing step of curing the adhesive after the bonding step,
wherein the bonding step is performed to bond the non-metallic substrate and the support together while sequentially passing the non-metallic substrate and the support through two or more nip roller pairs and wherein, of the two or more nip roller pairs, a nip roller pair provided downstream has a nip distance set to be equal to or smaller than a nip distance of a nip roller pair provided upstream.

2. The lamination method according to claim 1, wherein a surface of the adhesive applied to the main surface of the non-metallic substrate just before the bonding step has a maximum height Rmax indicative of surface roughness of up to 200 µm.

3. The lamination method according to claim 1 or 2, wherein at least one nip roller in a most downstream nip roller pair has a heater.

4. The lamination method according to any one of claims 1 to 3, wherein each nip roller of the two or more nip roller pairs has a diameter of 150 mm - 500 mm.

5. The lamination method according to any one of claims 1 to 4, wherein the adhesive applied to the main surface of the non-metallic substrate has an average thickness of 50 µm - 300 µm just before the bonding step.

6. The lamination method according to any one of claims 1 to 5, wherein the adhesive has a viscosity of 0.001 Pa·s - 100 Pa·s just before the bonding step.

7. The lamination method according to any one of claims 1 to 6, wherein the non-metallic substrate is made of a rubber material and has a thickness of 400 µm - 6,000 µm.

8. The lamination method according to any one of claims 1 to 7, wherein the non-metallic substrate has a modulus of elasticity of 0.5 N/mm² - 5.0 N/mm².

9. The lamination method according to any one of claims 1 to 8, wherein the adhesive is a photo-curable adhesive.

10. The lamination method according to any one of claims 1 to 9, wherein each of the two or more nip roller pairs has a nip distance-adjusting mechanism.

11. A laminate comprising:
a non-metallic substrate having a thickness of 400 µm - 6,000 µm;
an adhesive layer laminated onto a main surface of the non-metallic substrate and having a thickness of 50 µm - 300 µm; and
a support laminated onto the adhesive layer,
wherein a ratio R₀/d₀ of a maximum height R₀ indicative of surface roughness at an interface between the non-metallic substrate and the adhesive layer to an average thickness do of the non-metallic substrate is 5% - 30%, and
wherein a ratio R₁/d of a maximum height R₁ indicative of surface roughness at a surface of the support to an overall average thickness d of the non-metallic substrate, the adhesive layer and the support is 0.5% - 2.5%.

12. The laminate according to claim 11, wherein the non-metallic substrate is made of a rubber material and has a modulus of elasticity of 0.5 N/mm² - 5.0 N/mm².

13. The laminate according to claim 11 or 12, wherein a cover film is adhered to an opposite main surface of the non-metallic substrate.
